(19)

Europäisches
Patentamt
European
Patent Office
Office européen
des brevets

(11)     EP 2 067 569 B1

(12)     **EUROPEAN PATENT SPECIFICATION**

(45) Date of publication and mention
of the grant of the patent:
**30.06.2010 Bulletin 2010/26**

(51) Int Cl.:
**B23Q 1/38** *(2006.01)* **B23Q 1/52** *(2006.01)*
**F16C 29/02** *(2006.01)*

(21) Application number: **08021041.2**

(22) Date of filing: **04.12.2008**

(54) **System and method for feeding pressurized fluid to hydrostatic rotary tables**

Vorrichtung und Verfahren zum Zuführen von Flüssigkeit zu einem hydrostatischen Drehtisch

Méthode et dispositif d'alimentation d'un fluide sous pression a une table rotative

(84) Designated Contracting States:
**DE ES IT**

(30) Priority: **06.12.2007 IT MO20070374**

(43) Date of publication of application:
**10.06.2009 Bulletin 2009/24**

(73) Proprietor: **PAMA S.P.A.**
**38068 Rovereto (TN) (IT)**

(72) Inventor: **Nainer, Alberto**
**38100 Trento (IT)**

(74) Representative: **Crugnola, Pietro**
**Luppi & Associati S.r.l.**
**Via Camperio 11**
**20123 Milano (IT)**

(56) References cited:
**EP-A- 0 113 305   DE-A1- 3 819 636**
**DE-B- 1 148 123**

**Description**

The present invention relates to hydrostatic rotary tables for machine tools, in particular it relates to a system and a method for feeding with pressurised fluid a hydrostatic rotary table in order to enable the regular operation of the hydrostatic rotary table even if the hydrostatic rotary table supports eccentric or decentred loads of significant amount.

Hydrostatic rotary tables are known that are used in machine tools of large dimensions for supporting and rotating elements on which to perform a plurality of mechanical machinings.

A hydrostatic rotary table substantially comprises a fixed lower fifth wheel, which is generally mounted on a frame of the machine tool, and a rotating upper fifth wheel, provided with a working surface for supporting the elements to be machined. The rotating upper wheel is maintained separate and suspended, or floating, on the lower fifth wheel by means of a supporting film formed by the pressurised fluid. In particular, the lower fifth wheel is provided with a plurality of hydrostatic pressure pockets, arranged regularly spaced apart along a peripheral circumference of said lower fifth wheel and fed with the pressurised fluid. This fluid, which is typically oil, is forced into each pocket and in a gap created by respective guiding surfaces of said fifth wheels, that face and are opposite one another, so as to form the aforesaid supporting film. The pockets are fed with the fluid at a same pressure, the value of which is a function of the load supported by the rotary table, so that the thickness of the film of fluid is constant and such as to prevent contact and/or sliding between the guiding surfaces of the fifth wheels, in all operating conditions.

This feeding system of the pockets, particularly in the case of elements or parts to be machined of large dimensions and weight, nevertheless ensures correct hydrostatic support of the upper fifth wheel on the lower fifth wheel only if the load is centred, i.e. with the respective centre of gravity arranged substantially at a vertical rotation axis of the table.

In the case of eccentric or decentred loads - such as elongated elements positioned in a cantilevered manner on the rotary table - due to the different distribution of the weight in the various pockets and along the gap, the thickness of the supporting film can be variable, in particular more reduced on the side of the table from which the load extends eccentrically outwards, and wider on the opposite side.

This variation in thickness determines a tilt of the upper fifth wheel, so-called "tilting", that in addition to being negative for the precision and accuracy of the machinings to be performed on the workpiece, is very dangerous because it may lead to contact of the guiding surfaces of the fifth wheels, which thus may be damaged.

In order to overcome this tilting phenomenon, hydrostatic rotary tables are known in which each pocket of the lower fifth wheel is fed independently, the oil being supplied at a suitable pressure in function of the eccentricity of the load. The feeding system thus comprises for each pocket at least a proportional valve, or other device suitable for adjusting a pressure and/or a flow rate of the oil, and a sensor that is able to measure the thickness of the oil film at this pocket. The feeding system further comprises a control unit that receives and processes the measuring signals sent by each sensor to control in an appropriate manner the respective proportional valves.

Such supplying systems have the drawback of being very complex and costly, both to make and to manage, especially in the case of tables of large dimensions having a high number of hydrostatic pockets.

EP 0113305 discloses a rotating platform for a metrological table comprising a disc-shaped equipment-carrying platform with means for supporting it and for driving the disc in rotation. The equipment-carrying platform is formed from a granite block and the means for supporting the disc comprise a set of devices generating individual air cushions located under the disc, means for the selective control of the air-cushion devices, and means for supporting the disc when at rest. The means for driving the disc in rotation consist of a centre pin producing the rotation of the disc without radial play but with axial play.

DE 1148123 discloses an arrangement for regulating the height of the lubricating film on the slide tracks of machine tools, comprises pressure chambers provided in a support bed and connected to a pump; the flow of lubricant is adjusted by a throttle-valve, sensing means are positioned in each of the chambers to measure the height of the film, reference means compare the desired with the actual height of the film; an amplifier is connected to the reference means and to means which actuate said throttle-valve.

An object of the present invention is to improve known systems and methods for feeding with pressurised fluid a hydrostatic rotary table that is associable with a machine tool for supporting elements to be machined.

Another object is to obtain a system and a method that permit regular and correct operation of the hydrostatic rotary table even in the event of decentred or eccentric loads, by ensuring a substantially constant thickness of a supporting film of said hydrostatic table and eliminating, or considerably reducing, tilting phenomena of the aforesaid table.

A still further object is to make a feeding system having a simple and compact structure, such as to enable precise and reliable operation and a reduction in constructional and management costs.

In a first aspect of the invention a system is provided for feeding with a pressurised fluid a hydrostatic rotary table for a machine tool according to claim 1.

Each feeding unit comprises a feeding manifold and adjusting means interposed between said manifold and dispensing means of said pressurised fluid, the aforesaid adjusting means being arranged for supplying a respective adjustable feeding flow rate.

The dispensing means supplies the fluid with a main feeding pressure that is substantially constant and has a defined value.

The feeding pressures, the hydraulic resistances and, therefore, the flow rates of said fluid in each hydrostatic pocket are definable by respective mathematical formulas defining a trend of the aforesaid parameters that is substantially sinusoidal and dependent on the number of feeding units and the number of hydrostatic pockets of the rotary table.

In a second aspect of the invention a method is provided for feeding with a pressurised fluid a hydrostatic rotary table for a machine tool according to claim 10.

Owing to these aspects of the invention it is thus possible to achieve a system and a method for feeding with pressurised fluid hydrostatic pads of a hydrostatic rotary table, ensuring regular and precise operation of the hydrostatic rotary table even in the event of decentred or eccentric loads. The system and the method in fact enable the feeding pressures of the fluid in each pressure pocket of the rotary table to be adjusted in a rapid and precise manner so as to maintain a substantially constant thickness of supporting film of fluid interposed between the fifth-wheel means. This enables operation of the hydrostatic rotary table to be correct and regular, eliminating, or significantly reducing, phenomena of tilting of the rotary table.

The system also has a very simple and compact structure as only a limited number of feeding units, at least three, is provided for controlling even a high number of hydrostatic pockets. The invention can be better understood and implemented with reference to the attached drawings, that illustrate an embodiment thereof by way of non-limiting example, in which:

Figure 1 is a schematic plan view of the feeding system of the invention associated with a hydrostatic rotary table;
Figure 2 is an enlarged schematic plan view of the rotary table in Figure 1, showing hydrostatic pressure pockets of a lower fifth wheel of said table supporting a decentred, partially represented load;
Figure 3 is a partial section along the line III-III in Figure 2;
Figure 4 is a partial schematic view of a feeding circuit of the system in Figure 1 for a first hydrostatic pocket;
Figure 5 is a diagram that illustrates the trend of feeding pressures of a fluid sent to said hydrostatic pockets;
Figure 6 is a diagram that illustrates a version of the trend of said feeding pressures;
Figure 7 is a schematic plan view of a version of the rotary table of Figure 1 fed by the system of the invention.

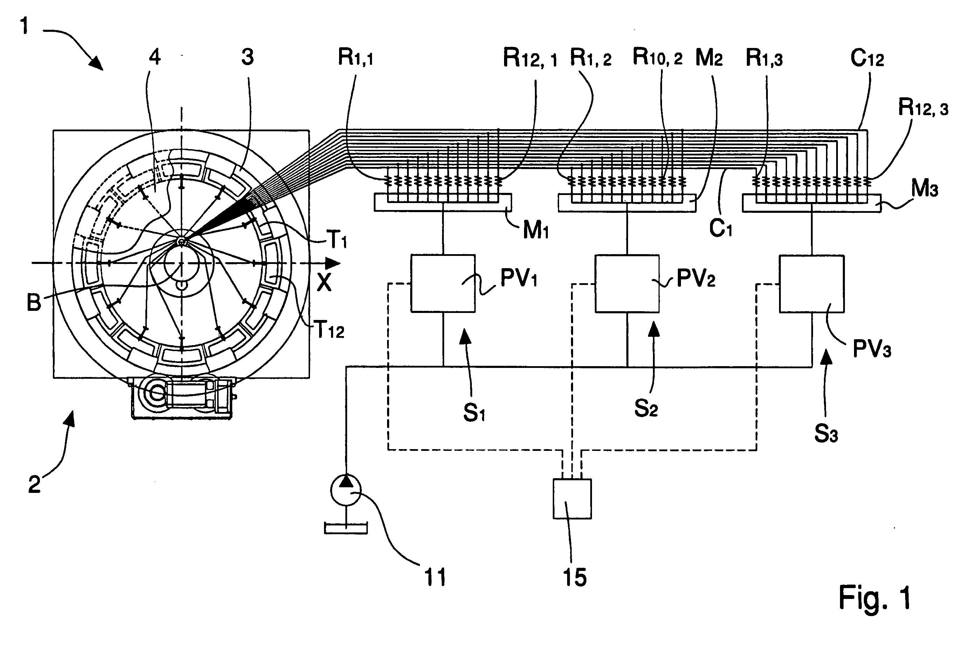

With reference to Figures 1 to 3, there is illustrated schematically a system 1 for feeding with a pressurised fluid, typically oil, a hydrostatic rotary table 2, which table is provided with hydrostatic main pads and is associable with a machine tool.

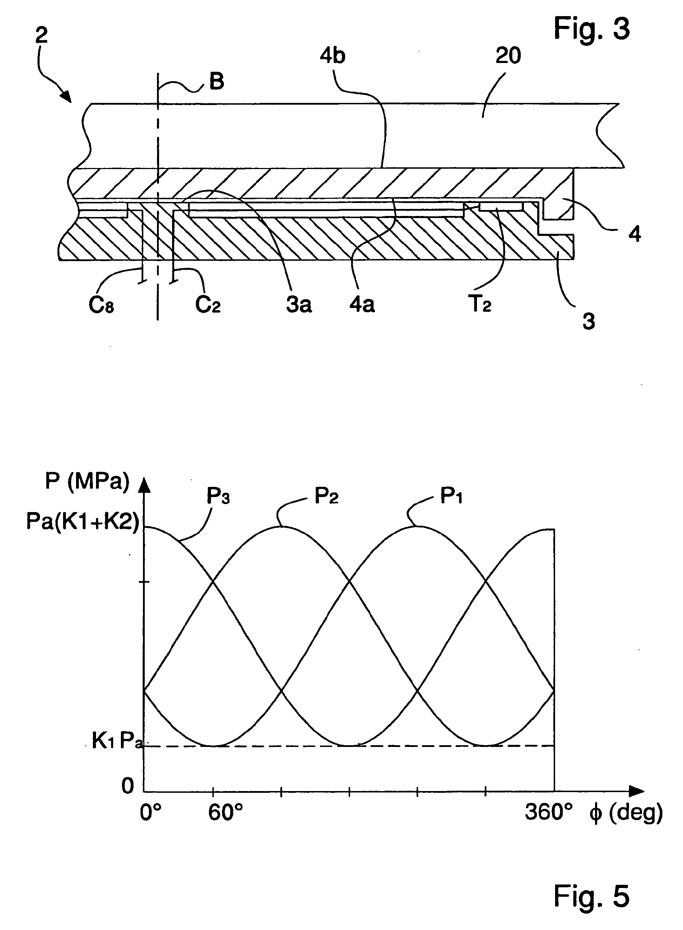

The rotary table 2 comprises a first lower supporting fifth wheel 3 provided with a plurality of hydrostatic pressure pockets $T_1$-$T_{12}$, arranged angularly and regularly spaced apart along a peripheral crown and fed with said fluid so as to support in a fluid suspension manner a second upper fifth wheel 4 provided with a work plane 4b on which to position a load or element to be machined 20. In particular, the pressurised fluid supplied to the hydrostatic pockets $T_1$-$T_{12}$ forms between a first guiding surface 3a of the lower fifth wheel 3 and a second guiding surface 4a of the upper fifth wheel 4 facing and opposite the first surface 3a, a supporting film (Figure 3).

The number of main pads, i.e. of the pressure pockets, which are substantially identical to one another, is variable in function of the dimensions of the hydrostatic table 2. In the embodiment illustrated by way of example in the figures, the pockets $T_1$-$T_{12}$ are twelve.

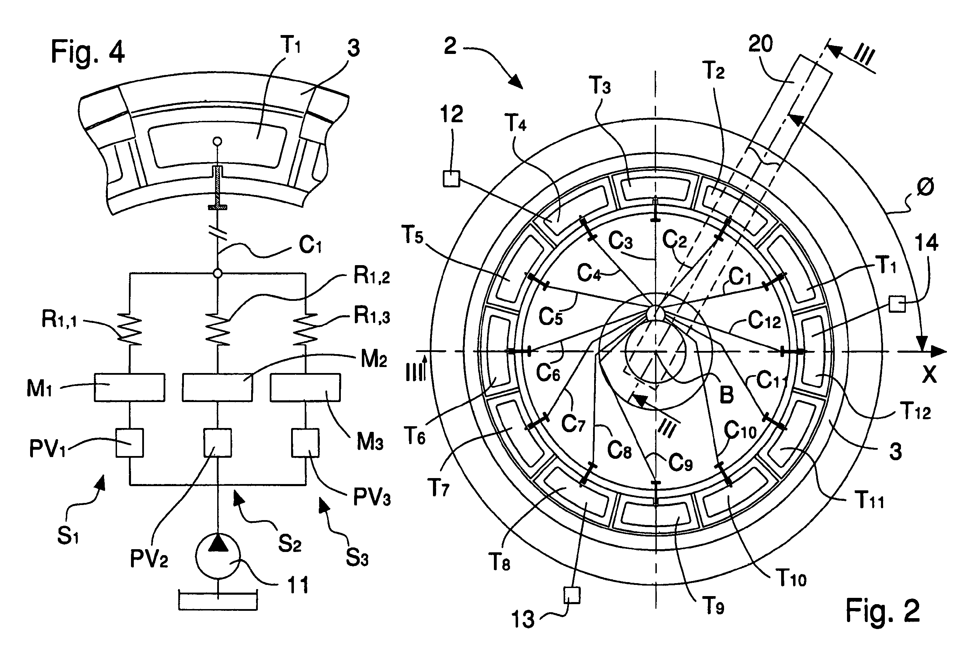

Each pocket $T_1$-$T_{12}$ is connected by respective hydraulic resistances to a plurality of feeding units $S_1$, $S_2$, $S_3$ arranged for supplying the fluid with respective feeding pressures $P_1$, $P_2$, $P_3$ that are adjustable in function of an angular position $\phi$ of the element 20, positioned on the upper fifth wheel 4 that is decentred in relation to said rotation axis B. In particular, the element 20 is decentred when it is positioned on the table 2 so that the projection of the centre of gravity of the element 20 is substantially spaced apart in a radial direction from the rotation axis B and angularly spaced apart by the angle $\phi$ with respect to a reference axis X, parallel to said guiding surfaces 3a, 4a and passing through the rotation axis B and through one of the hydrostatic pockets, for example the twelfth pocket $T_{12}$ (Figure 2).

Each feeding unit $S_1$, $S_2$, $S_3$ comprises a respective feeding manifold $M_1$, $M_2$, $M_3$, fed by said hydraulic fluid with a respective feeding pressure $P_1$, $P_2$, $P_3$.

The feeding units $S_1$, $S_2$, $S_3$ and the corresponding feeding manifolds $M_1$, $M_2$, $M_3$ are at least three in number and each feeding unit $S_1$, $S_2$, $S_3$ feeds twelve hydraulic resistances connected to respective hydrostatic pockets $T_1$-$T_{12}$ by respective supply conduits $C_1$-$C_{12}$. Each supply conduit $C_1$-$C_{12}$ connects the corresponding hydrostatic pocket to the respective three hydraulic resistances, fed by the respective three feeding manifolds $M_1$, $M_2$, $M_3$.

Each feeding unit $S_1$, $S_2$, $S_3$ comprises adjusting means $PV_1$, $PV_2$, $PV_3$ that is interposed between the feeding manifolds $M_1$, $M_2$, $M_3$ and dispensing means 11 of said pressurised fluid and is arranged for providing said adjustable feeding pressures $P_1$, $P_2$, $P_3$ to the manifolds $M_1$, $M_2$, $M_3$.

In particular, the adjusting means comprises a plurality of proportional valves $PV_1$, $PV_2$, $PV_3$, each of which is connected, at the inlet, to the dispensing means 11 and, at the outlet, to the respective feeding manifold $M_1$, $M_2$, $M_3$ to feed the respective feeding manifold $M_1$, $M_2$, $M_3$ with hydraulic fluid at a corresponding feeding pressure $P_1$, $P_2$, $P_3$.

The dispensing means 11 comprises, for example, a hydraulic pump that supplies the proportional valves $PV_1$, $PV_2$, $PV_3$ with the fluid at a main, substantially constant, feeding pressure $P_a$, having a defined value, in particular comprised between 3 and 10 MPa, typically 5 MPa.

The proportional valves $PV_1$, $PV_2$, $PV_3$ are controlled electronically by a control unit 15 of the feeding system 1, so as to feed the respective feeding manifolds $M_1$, $M_2$, $M_3$ with the hydraulic fluid at the corresponding feeding pressures $P_1$, $P_2$, $P_3$. In a version of the feeding system 1 of the invention that is not shown in the figures, the control units $S_1$, $S_2$, $S_3$ comprise respective hydraulic pumps, each of which is electronically controlled by the control unit 15 and is able to feed the corresponding feeding manifold $M_1$, $M_2$, $M_3$ with a respective adjustable feeding pressure $P_1$, $P_2$, $P_3$.

The value of each adjustable feeding pressure is defined by the following first equation:

$$P_j = P_a \cdot \left( K_1 + \frac{K_2}{2} \cdot \left( \cos\left( \phi + \frac{2\pi j}{M} \right) + 1 \right) \right) \qquad \text{[eq. 1]}$$

in which:

$P_j$ is the feeding pressure of the generic feeding manifold $M_j$ [Mpa] ;

$P_a$ is the main feeding pressure of the hydraulic fluid supplied by the hydraulic pump 11 [Mpa];

$K_1$, $K_2$ are dimensionless positive parameters such that $0 < K_1 + K_2 \leq 1$;

$\phi$ is the angular position of the element 20 with respect to the reference axis X [rad];

$j = 1, 2, ..., M$; where M is the total number of the feeding manifolds (M = 3 in the illustrated embodiment).

The feeding pressures $P_1$, $P_2$, $P_3$ are thus modulated according to a substantially sinusoidal law in function of the angular position $\phi$ of said decentred element 20, as illustrated in detail in the diagram in Figure 5. Each feeding pressure $P_1$, $P_2$, $P_3$ thus varies in function of the angular position $\phi$ between a maximum value equal to $P_a \cdot (K_1 + K_2)$ and a minimum value equal to $P_a K_1$.

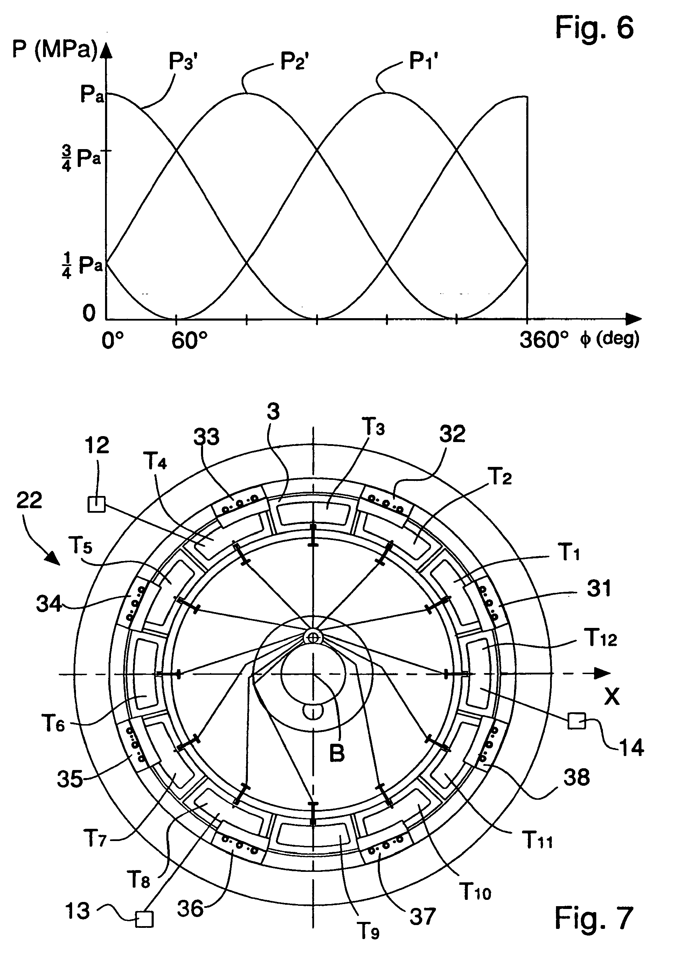

With reference to Figure 6, there is provided a version of the formula defining each adjustable feeding pressure, which enables maximum compensation to be obtained in the event of a decentred load:

$$P_j' = \frac{P_a}{2} \cdot \left( \cos\left( \phi + \frac{2\pi j}{M} \right) + 1 \right) \qquad \text{[eq. 1a]}$$

that is obtainable from the previous first equation [eq. 1] if $K_1 = 0$ and $K_2 = 1$.

In this case, each feeding pressure $P_1'$, $P_2'$, $P_3'$ varies between a maximum value, equal to the main feeding pressure $P_a$, and a minimum value equal to zero.

With particular reference to Figure 3, the first hydrostatic pocket $T_1$, for example, is fed with the three feeding pressures $P_1$, $P_2$, $P_3$ supplied by the proportional valves $PV_1$, $PV_2$, $PV_3$ by respective hydraulic resistances $R_{1,1}$, $R_{1,2}$, $R_{1,3}$ · The hydraulic resistances $R_{1,1}$, $R_{1,2}$, $R_{1,3}$ are connected to the first pocket $T_1$ by a first supply conduit $C_1$.

The value of a generic hydraulic resistance $R_{i,j}$, interposed between an i-th hydrostatic pocket $T_i$ and a j-th feeding manifold $M_j$, is calculable with the following second equation:

$$R_{i,j} = \frac{K}{\cos\left( \frac{2\pi i}{N} + \frac{2\pi j}{M} \right) + 1} \qquad [\text{MPa} \cdot \text{s/m}^3] \qquad \text{[eq. 2]}$$

where:

K is a proportionality constant [MPa · s/m$^3$];

$i = 1, 2, ..., N$; N is the total number of the hydrostatic pockets (N = 12 in the illustrated embodiment);

$j = 1, 2, ..., M$; M is the total number of the feeding manifolds. (M = 3 in the illustrated embodiment).

In the second equation [eq. 2] to calculate resistances Ri,j, the denominator may be the same as zero. In this case, the corresponding resistance (having a theoretically infinite value) has to be eliminated and the connection of the pocket with the corresponding feeding manifold has to be therefore closed. Similarly, in order to simplify the system 1, all the resistances can be eliminated that have a very high value, without obtaining significant differences in the feeding flow rates of the hydrostatic pockets $T_1$-$T_{12}$ and thus in the behaviour of the rotary table 2.

The hydraulic resistances are made, for example, by using capillary pipes of a constant diameter, having lengths that are preset and proportional to the value of the desired resistances.

The N x M hydrostatic resistances of the system (12x3=36 in the illustrated embodiment) are calculated in such a way that in the case of a centred load, positioned on the rotary table, by setting the same pressure values ($P_1$=$P_2$=$P_3$=$P_a$=cost) on the proportional valves $PV_1$, $PV_2$, $PV_3$, feeding flow rates $Q_1$, $Q_2$, ..., $Q_{12}$ of said hydraulic fluid are obtained that are substantially the same in all the hydrostatic pockets, this determining a uniform raising of the rotating upper fifth wheel.

The equal values of the feeding pressures are obtainable from the first equation [eq. 1] if $K_1$=1 and $K_2$=0.

The value of a flow rate $Q_1$, $Q_2$, ..., $Q_{12}$ of said hydraulic fluid in each supporting pocket $T_1$, $T_2$, ..., $T_{12}$ is calculable with the following third equation:

$$Q_i = \sum_{j=i}^{M} \left( \frac{P_j - P_t}{R_{i,j}} \right) \qquad [\text{m}^3/\text{s}] \qquad\qquad [\text{eq. 3}]$$

where:

Q$_i$ is the feeding flow rate in an i-th pocket $T_i$;
P$_j$ is the feeding pressure of j-th manifold $M_j$ [Mpa] ;
P$_t$ is a pocket pressure, i.e. an effective pressure of said hydraulic fluid in pressure pockets [Mpa];
R$_{i,j}$ is the hydraulic resistance interposed between the i-th pocket $T_i$ and the j-th manifold $M_j$ [MPa $\cdot$ s/ m$^3$];

$$i = 1, 2, \ldots, N;$$

$$j = 1, 2, \ldots, M.$$

In the case of a centred load with the same feeding pressures values ($P_1$=$P_2$=$P_3$=$P_a$=cost), by supposing constant pocket pressures $P_t$, the flow rates in each pocket are constant:

$$Q_i = \sum_{j=1}^{M} \left( \frac{P_j - P_t}{R_{i,j}} \right) \doteq \text{constant} \qquad\qquad [\text{eq. 3a}]$$

In the case of a decentred load or element 20, with the feeding pressures $P_1$, $P_2$, $P_3$ modulated according to the sinusoidal law defined above, by replacing in the third equation [eq. 3] the values of Pj and Ri,j calculated respectively with the first equation [eq.1] and with the second equation [eq.2] there is obtained:

$$Q_i = \sum_{j=1}^{M} \left( \frac{P_j - P_t}{R_{i,j}} \right) = M \frac{K_1 P_a - P_t}{K} + \frac{M K_2 P_a}{4K} \cdot \left( 2 + \cos\left( \frac{2\pi i}{N} - \phi \right) \right) \cdots \qquad [\text{eq.4}]$$

The feeding flow rates $Q_1$, $Q_2$, ..., $Q_{12}$ thus have a trend defined by a substantially sinusoidal law in relation to the angular position $\phi$, such as to compensate for the decentred or eccentric position of the element 20 substantially reducing the tilting of the rotary table 2, i.e. of the second upper fifth wheel 4 in relation to the first lower fifth wheel 3.

The formula defined in the fourth equation [eq.4] applies to $P_t$ constant. In the case of an imbalanced load, the pocket pressure $P_t$ varies in fact in function of the position. As the pocket pressure $P_t$ is normally less than the main feeding pressure $P_a$ and in particular $P_t$ < 1/3 $P_a$, the fourth equation [eq.4] can be considered to be a good approximation, supposing $P_t$ to be equal to average pressure.

The angular position $\phi$ of the decentred element 20, that modifies the step of the trend of the flow rates $Q_1$, $Q_2$, ..., $Q_{12}$ has to be set in function of an initial imbalance position $\phi_0$ of said element 20 and of a subsequent rotation angle $\alpha$ of the table 2.

By way of example, in the configuration illustrated in Figure 2, the element 20 has an angular position $\phi = 60°$ in relation to the reference axis X. By introducing this value into the fourth equation [eq.4] it is possible to calculate the values of the feed flow rates $Q_1$, $Q_2$, ..., $Q_{12}$ in each of the twelve hydrostatic pockets $T_1$, $T_2$, ..., $T_N$ and easily check that the highest flow rate value $(Q_2)$ is obtained for the second hydrostatic pocket $T_2$, which is subject to the greatest pressure from said element 20. The values of the flow rates thus progressively decrease in the adjacent pockets as far as the eighth hydrostatic pocket $T_8$, opposite the second pocket $T_2$, to which the lower flow rate $(Q_8)$ corresponds:

Table 1

| $Q_1=W_1+W_2 \cdot 0.86$ | $Q_2=W_1+W_2$ | $Q_3=W_1+W_2 \cdot 0.86$ | $Q_4= W_1+W_2\ 0.50$ |
|---|---|---|---|
| $Q_5=W_1$ | $Q_6=W_1-W_2 \cdot 0.50$ | $Q_7=W_1-W_2 \cdot 0.86$ | $Q_8= W_1-W_2$ |
| $Q_9=W_1-W_2 \cdot 0.86$ | $Q_{10}=W_1-W_2 \cdot 0.50$ | $Q_{11}=W_1$ | $Q_{12}=W_1+W_2 \cdot 0.50$ |

where:

$$W_1 \;=\; \frac{3P_a - 6P_t}{2K}\,, \quad W_2 \;=\; \frac{3P_a}{4K} \quad [m^3/s]$$

if $K_1=0$ , $K_2=1$, $M=3$, $N=12$

The feeding system 1 further comprises sensor means 12, 13, 14 connected to the control unit 15 and arranged for detecting the possible load imbalance, i.e. an initial angular position $\phi_0$ of said decentred element 20 in relation to the reference axis X. The sensor means comprises, in particular, at least three pressure sensors 12, 13, 14 connected to respective hydrostatic pockets that are angularly spaced apart from one another, for example equally spaced apart by 120°.

With reference to Figure 2, a first pressure sensor 12 is connected to a fourth pocket $T_4$, a second pressure sensor 13 is connected to an eighth pocket $T_8$, a third pressure sensor 14 is connected to a twelfth pocket $T_{12}$.

In an initial adjusting step of the system 1 and of the rotary table 2, to detect the possible load imbalance 20, the hydrostatic pockets $T_1$-$T_{12}$ of the table 2 are fed with equal pressures as in the case of a centred load $(P_1=P_2=P_3=P_o=cost)$. The different pressures measured by the sensors 12, 13, 14 in the respective hydrostatic pockets $T_4$, $T_8$, $T_{12}$ enable the control unit 15 to calculate, by suitable algorithms, an initial angular position $\phi_0$ of said eccentric load 20.

Such algorithms provide the following steps.

Once the values of the pocket pressures $P_{t4}$, $P_{t8}$, $P_{t12}$ have been measured in the three hydrostatic pockets $T_4$, $T_8$, $T_{12}$, the average value of the pressures is subtracted therefrom, obtaining respective reduced pressures:

$$P_{t4}' \;=\; P_{t4} - \frac{P_{t4} + P_{t8} + P_{t12}}{3} \quad [MPa]$$

$$P_{t8}' \;=\; P_{t8} - \frac{P_{t4} + P_{t8} + P_{t12}}{3} \quad [MPa]$$

$$P_{t12}' \;=\; P_{t12} - \frac{P_{t4} + P_{t8} + P_{t12}}{3} \quad [MPa]$$

Such reduced pressure values are used to calculate three normalized values:

$$a = \frac{\sqrt{\tfrac{2}{3}}P_{t4}'}{\sqrt{P_{t4}'^2 + P_{t8}'^2 + P_{t12}'^2}}$$

$$b = \frac{\sqrt{\tfrac{2}{3}}P_{t8}'}{\sqrt{P_{t4}'^2 + P_{t8}'^2 + P_{t12}'^2}}$$

$$c = \frac{\sqrt{\tfrac{2}{3}}P_{t12}'}{\sqrt{P_{t4}'^2 + P_{t8}'^2 + P_{t12}'^2}}$$

Using the aforesaid three normalized values it is, lastly, possible to calculate the angle $\phi$ by means of the following formulas:

$$\phi = \begin{cases} \arccos\left(a - \tfrac{1}{2}b - \tfrac{1}{2}c\right) & \text{if } b \geq c \\ 2\pi - \arccos\left(a - \tfrac{1}{2}b - \tfrac{1}{2}c\right) & \text{if } b < c \end{cases} \qquad \text{[eq.5]}$$

In this manner, in a subsequent step the control unit 15 is able to set automatically the values of the feeding pressures $P_1$, $P_2$, $P_3$ of the feeding manifolds $M_1$, $M_2$, $M_3$ so as to compensate for the imbalance of the eccentric load 20 ($\phi = \phi_0$).

During operation, at each rotation of the hydrostatic table 2 around the rotation axis B, the values of the feeding pressures $P_1$, $P_2$, $P_3$ are recalculated by the control unit 15 in function of a new angular position that comprises the initial angular position $\phi_0$ and a rotation angle $\alpha$ of said hydrostatic table 2 ($\phi = \phi_0 + \alpha$).

The rotation angle $\alpha$ of the upper fifth wheel 4 in relation to the reference axis X is measured by further sensor means that is of known type and is not illustrated in the figures.

The feeding system 1 of the invention thus, in the case of a decentred or eccentric load, enables the feeding pressures of the fluid in each pressure pocket of the hydrostatic rotary table 2 to be adjusted in a regular and precise manner, so as to maintain substantially constant the thickness of supporting fluid film between the fifth wheels 3, 4. This permits a regular and correct operation of the hydrostatic rotary table, eliminating, or considerably reducing, phenomena of tilting of the upper fifth wheel in relation to the lower fifth wheel. The system further has a very simple and compact structure as only a limited number of proportional valves is provided, for example three, to check even a great number of hydrostatic pockets. Similarly, by means of a limited number of simple pressure sensors it is possible to determine with precision the initial position of the decentred element on the table, to adjust the various feeding pressures.

This enables operation of the rotary table 2 to be precise and reliable and constructional and management costs to be reduced.

With reference to Figure 7 there is illustrated a hydrostatic table 22 provided with a plurality of hydrostatic preloading pads 31-38, so-called anti-overturning clamps, acting on the upper fifth wheel in a direction opposite that of the main hydrostatic pads and fed by the feeding system 1 of the invention.

Similarly to the hydrostatic pockets $T_1$-$T_{12}$ of the main pads, each pressure pocket of the preloading pads 31-38 is fed by respective hydraulic resistances to the feeding manifolds $M_1$, $M_2$, $M_3$ fed with the feeding pressures $P_1$, $P_2$, $P_3$. The values of the resistances are such that the trend of the respective flow rate in each preloading pad 31-38, is in phase opposition to the flow rate of the main pad facing the preloading pad 31-38 so as to ensure the maximum stability and stiffness of the system.

## Claims

1.  System for feeding with a pressurised fluid a hydrostatic rotary table (2) for a machine tool, said hydrostatic rotary table (2) comprising first fifth-wheel means (3) provided with a plurality of hydrostatic pockets ($T_1$, $T_2$, ..., $T_{12}$) fed with said pressurised fluid for supporting second fifth-wheel means (4) rotating around a rotation axis (B) and arranged for supporting an element (20), said system comprising a plurality of feeding units ($S_1$, $S_2$, $S_3$), each feeding unit ($S_1$, $S_2$, $S_3$) being arranged for providing said fluid to said hydrostatic pockets ($T_1$, $T_2$, ..., $T_{12}$) with a respective feeding pressure ($P_1$, $P_2$, $P_3$) that is adjustable in function an angular position ($\phi$) of said element (20) with respect to a reference axis (X) of said hydrostatic rotary table (2), in particular said element (20) being arranged on said second fifth-wheel means (4) in a decentred manner in relation to said rotation axis (B), the system being **characterised in that** each hydrostatic pockets ($T_1$, $T_2$, ..., $T_{12}$) is connected by respective hydraulic resistances ($R_{1,1}$, $R_{1,2}$, $R_{1,3}$,..., $R_{12,3}$) to said plurality of feeding units ($S_1$, $S_2$, $S_3$) and **in that** each adjustable feeding pressure ($P_1$, $P_2$, $P_3$) is obtainable from a main feeding pressure ($P_a$) by adjusting means ($PV_1$, $PV_2$, $PV_3$) of a respective feeding unit ($S_1$, $S_2$, $S_3$), each feeding pressure being defined by the formula:

$$P_j = P_a \cdot \left( K_1 + \frac{K_2}{2} \cdot \left( \cos\left( \phi + \frac{2\pi j}{M} \right) + 1 \right) \right) \qquad \text{[eq. 1]}$$

where:

$P_a$ is said main feeding pressure of said fluid [Pa];
$K_1$ and $K_2$ are positive dimensionless parameters such that

$$0 < K_1 + K_2 \leq 1;$$

$\phi$ is said angular position of said decentred element (20) [rad];
$j = 1, 2, ..., M$; M being the total number of said feeding unit ($S_1$, $S_2$, $S_3$).

2. System according to claim 1, wherein each feeding unit ($S_1$, $S_2$, $S_3$) comprises a respective feeding manifold ($M_1$, $M_2$, $M_3$) fed by said hydraulic fluid with said respective adjustable feeding pressure ($P_1$, $P_2$, $P_3$).

3. System according to claim 2, wherein each feeding unit ($S_1$, $S_2$, $S_3$) comprises respective adjusting means ($PV_1$, $PV_2$, $PV_3$) interposed between the respective feeding manifold ($M_1$, $M_2$, $M_3$) and dispensing means (11) for supplying said fluid with said main feeding pressure ($P_a$) substantially constant and having a defined value, in particular comprised between 3 and 10 MPa.

4. System according to any preceding claim, wherein the value of a hydraulic resistance ($R_{1,1}$, $R_{1,2}$, $R_{1,3}$,... $R_{N,3}$) interposed between each hydrostatic pocket $T_1$, $T_2$, ..., $T_{12}$) and a respective feeding unit ($S_1$, $S_2$, $S_3$) is given by the formula:

$$R_{i,j} = \frac{K}{c \left( \frac{2\pi i}{N} + \frac{2\pi j}{M} \right) + 1} \qquad \text{[eq. 2]}$$

where:

K is a proportionality constant [Pa · m³/s];
$i = 1, 2, ..., N$; N being the total number of said hydrostatic pockets ($T_1$, $T_2$, ..., $T_{12}$);
$j = 1, 2, ..., M$; M being the total number of said plurality of feeding unit ($S_1$, $S_2$, $S_3$).

5. System according to claim 3 or 4, as claim 4 is appended to claim 3, comprising a control unit (15) arranged for controlling at least said adjusting means ($PV_1$, $PV_2$, $PV_3$) and sensor means (12, 13, 14) connected to said control unit (15) and arranged for detecting a possible imbalance of said element (20) in relation to said rotation axis (B) and/or determining an initial angular position ($\phi_0$) of said element (20) in relation to said reference axis (X).

6. System according to claim 5, wherein said sensor means comprises a plurality of pressure sensors (12, 13, 14) connected to respective hydrostatic pockets ($T_1$, $T_5$, $T_9$) of said first fifth-wheel means (3) for measuring a respective pocket pressure of said fluid, said respective hydrostatic pockets ($T_1$, $T_5$, $T_9$) being angularly spaced apart from one another.

7. System according to claim 5 or 6, comprising further sensor means suitable for measuring a rotation angle ($\alpha$) of said second fifth-wheel means (4), around said rotation axis (B), in relation to said reference axis (X), said control unit (15) being connected to said further sensor means so as to add said rotation angle (B) to said initial angular position ($\phi_0$) and calculate said angular position ($\phi$).

8. System according to any preceding claim, wherein the number (M) of said plurality of feeding units ($S_1$, $S_2$, $S_3$) is lower than the number (N) of said plurality hydrostatic pockets ($T_1$, $T_2$, ..., $T_{12}$).

9. Hydrostatic rotary table for a machine tool, provided with a plurality of hydrostatic pockets ($T_1$, $T_2$, ..., $T_{12}$), comprising a system (1) according to any preceding claim for feeding said hydrostatic pockets (T1, T2, ..., T12) with a pressurised fluid.

10. Method for feeding with a pressurised fluid a hydrostatic rotary table (2) for a machine tool, said hydrostatic rotary table (2) comprising first fifth-wheel means (3) provided with a plurality of hydrostatic pockets ($T_1$, $T_2$, ..., $T_{12}$) fed with said pressurised fluid for supporting second fifth-wheel means (4) rotating around a rotation axis (B) and arranged for supporting an element (20), **characterised in that** said method comprises feeding each hydrostatic pocket ($T_1$, $T_2$, ..., $T_{12}$), via respective hydraulic resistances ($R_{1,1}$, $R_{1,2}$, $R_{1,3}$,..., $R_{12,3}$), with a plurality of feeding pressures ($P_1$, $P_2$, $P_3$) that are adjustable in function of said angular position ($\phi$) of said element (20) with respect to a reference axis (X) of said hydrostatic rotary table (2), in particular said element (20) being arranged on said second fifth-wheel means (4) in a decentred manner in relation to said rotation axis (B), said plurality of feeding pressures ($P_1$, $P_2$, $P_3$) being adjustable by respective feeding unit ($S_1$, $S_2$, $S_3$), each adjustable feeding pressure ($P_1$, $P_2$, $P_3$) being obtainable from a main feeding pressure ($P_a$) by adjusting means ($PV_1$, $PV_2$, $PV_3$) of a respective feeding unit ($S_1$, $S_2$, $S_3$), each feeding pressure being defined by the formula:

$$P_j = P_a \cdot \left( K_1 + \frac{K_2}{2} \cdot \left( \cos\left( \phi + \frac{2\pi j}{M} \right) + 1 \right) \right) \qquad \text{[eq. 1]}$$

where:

$P_a$ is said main feeding pressure of said fluid [Pa];
$K_1$ and $K_2$ are positive dimensionless parameters such that

$$0 < K_1 + K_2 \leq 1;$$

$\phi$ is said angular position of said decentred element (20) [rad];
$j$ = 1, 2, ..., M; M being the total number of said feeding unit ($S_1$, $S_2$, $S_3$).

11. Method according to claim 10, wherein the value of a hydraulic resistance ($R_{1,1}$, $R_{1,2}$, $R_{1,3}$, ... $R_{N,3}$) interposed between each hydrostatic pocket ($T_1$, $T_2$, ..., $T_{12}$) and a respective feeding unit ($S_1$, $S_2$, $S_3$) is given by the formula:

$$R_{i,j} = \frac{K}{c \left( \frac{2\pi i}{N} + \frac{2\pi j}{M} \right) + 1} \qquad \text{[eq. 2]}$$

where:

K is a proportionality constant [Pa · M$^3$/S];

i = 1, 2, ..., N; N being the total number of said hydrostatic pockets ($T_1$, $T_2$, ..., $T_{12}$) ;

j = 1, 2, ..., M; M being the total number of said plurality of feeding units ($S_1$, $S_2$, $S_3$).

**12.** Method according to claim 10 or 11, comprising in an initial adjusting step detecting a possible imbalance of said element (20) in relation to said rotation axis (B), and determining an initial angular position ($\phi_0$) of said element (20) in relation to said reference axis (X) measuring a plurality of effective pressures ($P_{t4}$, $P_{t8}$, $P_{t12}$) of said fluid in respective hydrostatic pockets ($T_4$, $T_8$, $T_{12}$) of said first fifth-wheel means (3), said respective hydrostatic pockets ($T_4$, $T_8$, $T_{12}$) being angularly spaced apart from one another, said determining comprising comparing and processing said plurality of measured pocket pressures and calculating said initial angular position ($\phi_0$).

**13.** Method according to claim 12, wherein said initial angular position ($\phi_0$) is calculable by measuring the values of said effective pressures ($P_{t4}$, $P_{t8}$, $P_{t12}$) in three respective hydrostatic pockets ($T_4$, $T_8$, $T_{12}$) that are angularly spaced from one another by 120° with the formula:

$$\phi = \begin{cases} \arccos\left(a - \tfrac{1}{2}b - \tfrac{1}{2}c\right) & \text{if } b \geq c \\ 2\pi - \arccos\left(a - \tfrac{1}{2}b - \tfrac{1}{2}c\right) & \text{if } b < c \end{cases} \qquad [\text{eq.5}]$$

wherein:

$$a = \frac{\sqrt{\tfrac{2}{3}}P_{t4}'}{\sqrt{P_{t4}'^2 + P_{t8}'^2 + P_{t12}'^2}} \; ; \quad b = \frac{\sqrt{\tfrac{2}{3}}P_{t8}'}{\sqrt{P_{t4}'^2 + P_{t8}'^2 + P_{t12}'^2}} \, ,$$

$$c = \frac{\sqrt{\tfrac{2}{3}}P_{t12}'}{\sqrt{P_{t4}'^2 + P_{t8}'^2 + P_{t12}'^2}} \; ;$$

$$P_{t4}' = P_{t4} - \frac{P_{t4} + P_{t8} + P_{t12}}{3} \qquad [\text{MPa}]$$

$$P_{t8}' = P_{t8} - \frac{P_{t4} + P_{t8} + P_{t12}}{3} \qquad [\text{MPa}]$$

$$P_{t12}' = P_{t12} - \frac{P_{t4} + P_{t8} + P_{t12}}{3} \qquad [\text{MPa}]$$

**14.** Method according to claim 12 or 13, further comprising measuring a rotation angle ($\alpha$) of said second fifth-wheel means (4) in relation to said reference axis (X) to be added to said initial angular position ($\phi_0$) for calculating said angular position ($\phi$).

**Patentansprüche**

**1.** System zum Speisen eines hydrostatischen Drehtischs (2) für eine Werkzeugmaschine mit einem Druckfluid, wobei der hydrostatische Drehtisch (2) eine erste Satteleinrichtung (3) umfasst, die mit einer Vielzahl von hydrostatischen Fächern ($T_1$, $T_2$, ..., $T_{12}$) versehen ist, die mit den Druckfluid gespeist werden, um eine zweite Satteleinrichtung (4) abzustützen, die sich um eine Drehachse (B) dreht und zum Abstützen eines Elements (20) angeordnet ist, wobei das System eine Vielzahl von Speiseeinheiten ($S_1$, $S_2$, $S_3$) umfasst, wobei jede Speiseeinheit ($S_1$, $S_2$, $S_3$) zum Liefern des Fluids zu den hydrostatischen Fächern ($T_1$, $T_2$, ..., $T_{12}$) mit einem jeweiligen Speisedruck ($P_1$, $P_2$, $P_3$) angeordnet ist, der als Funktion einer Winkelposition ($\phi$) des Elements (20) in Bezug auf eine Bezugsachse (X) des hydrostatischen Drehtischs (2) einstellbar ist, wobei das Element (20) insbesondere an der zweiten Satteleinrichtung (4) in einer dezentrierten Weise in Bezug auf die Drehachse (B) angeordnet wird, wobei das System **dadurch gekennzeichnet ist, dass** jedes hydrostatische Fach ($T_1$, $T_2$, ..., $T_{12}$) durch jeweilige hydraulische Widerstände ($R_{1,1}$, $R_{1,2}$, $R_{1,3}$, ..., $R_{12,3}$) mit der Vielzahl von Speiseeinheiten ($S_1$, $S_2$, $S_3$) verbunden ist und dass jeder einstellbare Speisedruck ($P_1$, $P_2$, $P_3$) von einem Hauptspeisedruck ($P_a$) durch Einstelleinrichtungen ($PV_1$, $PV_2$, $PV_3$) einer jeweiligen Speiseeinheit ($S_1$, $S_2$, $S_3$) erhältlich ist, wobei jeder Speisedruck durch die Formel:

$$P_j \; = \; P_a \; \cdot \; \left( K_1 \; + \; \frac{K_2}{2} \; \cdot \; \left( \cos\left( \phi \; + \; \frac{2\pi j}{M} \right) + 1 \right) \right) \qquad \text{[Gl. 1]}$$

definiert ist, wobei:

$P_a$ der Hauptspeisedruck des Fluids ist [Pa];
$K_1$ und $K_2$ positive dimensionslose Parameter sind, so dass $0 < K_1 + K_2 \leq 1$;
$\phi$ die Winkelposition des dezentrierten Elements (20) ist [rad];
$j = 1, 2, ..., M$; wobei M die Gesamtzahl der Speiseeinheiten ($S_1$, $S_2$, $S_3$) ist.

2. System nach Anspruch 1, wobei jede Speiseeinheit ($S_1$, $S_2$, $S_3$) einen jeweiligen Speiserohrverteiler ($M_1$, $M_2$, $M_3$) umfasst, der mit dem Hydraulikfluid mit dem jeweiligen einstellbaren Speisedruck ($P_1$, $P_2$, $P_3$) gespeist wird.

3. System nach Anspruch 2, wobei jede Speiseeinheit ($S_1$, $S_2$, $S_3$) jeweilige Einstelleinrichtungen ($PV_1$, $PV_2$, $PV_3$) umfasst, die zwischen den jeweiligen Speiserohrverteiler ($M_1$, $M_2$, $M_3$) und eine Abgabeeinrichtung (11) zum Zuführen des Fluids mit dem Hauptspeisedruck ($P_a$), der im Wesentlichen konstant ist und einen definierten Wert aufweist, der insbesondere zwischen 3 und 10 MPa liegt, eingefügt sind.

4. System nach einem vorangehenden Anspruch, wobei der Wert eines hydraulischen Widerstandes ($R_{1,1}$, $R_{1,2}$, $R_{1,3}$, ..., $R_{N,3}$), der zwischen jedes hydrostatische Fach ($T_1$, $T_2$, ..., $T_{12}$) und eine jeweilige Speiseeinheit ($S_1$, $S_2$, $S_3$) eingefügt ist, durch die folgende Formel gegeben ist:

$$R_{i,j} \; = \; \frac{K}{c \; \left( \left( \frac{2\pi i}{N} + \frac{2\pi j}{M} \right) + 1 \right)} \qquad \text{[Gl. 2]}$$

wobei:

K eine Proportionalitätskonstante ist [Pa $\cdot$ m$^3$/s];
$i = 1, 2, ..., N$; wobei N die Gesamtzahl der hydrostatischen Fächer ($T_1$, $T_2$, ..., $T_{12}$) ist;
$j = 1, 2, ..., M$; wobei M die Gesamtzahl der Vielzahl von Speiseeinheiten ($S_1$, $S_2$, $S_3$) ist.

5. System nach Anspruch 3 oder 4, da Anspruch 4 an Anspruch 3 angehängt ist, mit einer Steuereinheit (15), die zum Steuern mindestens der Einstelleinrichtungen ($PV_1$, $PV_2$, $PV_3$) angeordnet ist, und Sensoreinrichtungen (12, 13, 14), die mit der Steuereinheit (15) verbunden sind und zum Erfassen eines möglichen Ungleichgewichts des Elements (20) in Bezug auf die Drehachse (B) und/oder zum Bestimmen einer anfänglichen Winkelposition ($\phi_0$) des Elements (20) in Bezug auf die Bezugsachse (X) angeordnet sind.

6. System nach Anspruch 5, wobei die Sensoreinrichtungen eine Vielzahl von Drucksensoren (12, 13, 14), die mit jeweiligen hydrostatischen Fächern ($T_1$, $T_5$, $T_9$) der ersten Satteleinrichtung (3) verbunden sind, zum Messen eines jeweiligen Fachdrucks des Fluids umfassen, wobei die jeweiligen hydrostatischen Fächer ($T_1$, $T_5$, $T_9$) in einem Winkel voneinander beabstandet sind.

7. System nach Anspruch 5 oder 6, das eine weitere Sensoreinrichtung umfasst, die zum Messen eines Drehwinkels ($\alpha$) der zweiten Satteleinrichtung (4) um die Drehachse (B) in Bezug auf die Bezugsachse (X) geeignet ist, wobei die Steuereinheit (15) mit der weiteren Sensoreinrichtung verbunden ist, um den Drehwinkel (B) zur anfänglichen Winkelposition ($\phi_0$) zu addieren und die Winkelposition ($\phi$) zu berechnen.

8. System nach einem vorangehenden Anspruch, wobei die Anzahl (M) der Vielzahl von Speiseeinheiten ($S_1$, $S_2$, $S_3$) niedriger ist als die Anzahl (N) der Vielzahl von hydrostatischen Fächern ($T_1$, $T_2$, ..., $T_{12}$).

9. Hydrostatischer Drehtisch für eine Werkzeugmaschine, der mit einer Vielzahl von hydrostatischen Fächern ($T_1$, $T_2$, ..., $T_{12}$) versehen ist, und mit einem System (1) nach einem vorangehenden Anspruch zum Speisen der hydrostatischen Fächer (T1, T2, ..., T12) mit einem Druckfluid.

10. Verfahren zum Speisen eines hydrostatischen Drehtischs (2) für eine Werkzeugmaschine mit einem Druckfluid, wobei der hydrostatische Drehtisch (2) eine erste Satteleinrichtung (3) umfasst, die mit einer Vielzahl von hydrostatischen Fächern ($T_1$, $T_2$, ..., $T_{12}$) versehen ist, die mit dem Druckfluid gespeist werden, um eine zweite Satteleinrichtung (4) abzustützen, die sich um eine Drehachse (B) dreht und zum Abstützen eines Elements (20) angeordnet ist, **dadurch gekennzeichnet, dass** das Verfahren das Speisen jedes hydrostatischen Fachs ($T_1$, $T_2$, ..., $T_{12}$) über jeweilige hydraulische Widerstände ($R_{1,1}$, $R_{1,2}$, $R_{1,3}$, ..., $R_{12,3}$) mit einer Vielzahl von Speisedrücken ($P_1$, $P_2$, $P_3$) umfasst, die als Funktion der Winkelposition ($\phi$) des Elements (20) in Bezug auf eine Bezugsachse (X) des hydrostatischen Drehtischs (2) einstellbar sind, wobei insbesondere das Element (20) an der zweiten Satteleinrichtung (4) in einer dezentrierten Weise in Bezug auf die Drehachse (B) angeordnet wird, wobei die Vielzahl von Speisedrücken ($P_1$, $P_2$, $P_3$) durch eine jeweilige Speiseeinheit ($S_1$, $S_2$, $S_3$) einstellbar sind, wobei jeder einstellbare Speisedruck ($P_1$, $P_2$, $P_3$) von einem Hauptspeisedruck ($P_a$) durch Einstelleinrichtungen ($PV_1$, $PV_2$, $PV_3$) einer jeweiligen Speiseeinheit ($S_1$, $S_2$, $S_3$) erhältlich ist, wobei jeder Speisedruck durch die folgende Formel definiert ist:

$$P_j = P_a \cdot \left( K_1 + \frac{K_2}{2} \cdot \left( \cos\left( \phi + \frac{2\pi j}{M} \right) + 1 \right) \right) \quad \text{[Gl. 1]}$$

wobei:

$P_a$ der Hauptspeisedruck des Fluids ist [Pa];
$K_1$ und $K_2$ positive dimensionslose Parameter sind, so dass $0 < K_1 + K_2 \le 1$;
$\phi$ die Winkelposition des dezentrierten Elements (20) ist [rad];
$j = 1, 2, ..., M$; wobei M die Gesamtzahl der Speiseeinheiten ($S_1$, $S_2$, $S_3$) ist.

11. Verfahren nach Anspruch 10, wobei der Wert eines hydraulischen Widerstandes ($R_{1,1}$, $R_{1,2}$, $R_{1,3}$, ..., $R_{N,3}$), der zwischen jedes hydrostatische Fach ($T_1$, $T_2$, ..., $T_{12}$) und eine jeweilige Speiseeinheit ($S_1$, $S_2$, $S_3$) eingefügt ist, durch die folgende Formel gegeben ist:

$$R_{i,j} = \frac{K}{c \cdot \left( \frac{2\pi i}{N} + \frac{2\pi j}{M} \right) + 1} \quad \text{[Gl. 2]}$$

wobei:

K eine Proportionalitätskonstante ist [Pa · m³/s];

i = 1, 2, ..., N; wobei N die Gesamtzahl der hydrostatischen Fächer ($T_1$, $T_2$, ..., $T_{12}$) ist;

j = 1, 2, ..., M; wobei M die Gesamtzahl der Vielzahl von Speiseeinheiten ($S_1$, $S_2$, $S_3$) ist.

**12.** Verfahren nach Anspruch 10 oder 11, das in einem anfänglichen Einstellschritt das Erfassen eines möglichen Ungleichgewichts des Elements (20) in Bezug auf die Drehachse (B) und das Bestimmen einer anfänglichen Winkelposition ($\phi_0$) des Elements (20) in Bezug auf die Bezugsachse (X) umfasst, wobei eine Vielzahl von effektiven Drücken ($P_{t4}$, $P_{t8}$, $P_{t12}$) des Fluids in jeweiligen hydrostatischen Fächern ($T_4$, $T_8$, $T_{12}$) der ersten Satteleinrichtung (3) gemessen wird, wobei die jeweiligen hydrostatischen Fächer ($T_4$, $T_8$, $T_{12}$) in einem Winkel voneinander beabstandet sind, wobei das Bestimmen das Vergleichen und Verarbeiten der Vielzahl von gemessenen Fachdrücken und das Berechnen der anfänglichen Winkelposition ($\phi_0$) umfasst.

**13.** Verfahren nach Anspruch 12, wobei die anfängliche Winkelposition ($\phi_0$) durch Messen der Werte der effektiven Drücke ($P_{t4}$, $P_{t8}$, $P_{t12}$) in drei jeweiligen hydrostatischen Fächern ($T_4$, $T_8$, $T_{12}$), die um einen Winkel von 120 ° voneinander beabstandet sind, mit der folgenden Formel berechenbar ist:

$$\phi = \begin{cases} \arccos\left(a - \tfrac{1}{2}b - \tfrac{1}{2}c\right) & \text{falls } b \geq c \\ 2\pi - \arccos\left(a - \tfrac{1}{2}b - \tfrac{1}{2}c\right) & \text{falls } b < c \end{cases} \qquad [Gl.\ 5]$$

wobei:

$$a = \frac{\sqrt{\tfrac{2}{3}}\,P_{t4}'}{\sqrt{P_{t4}'^2 + P_{t8}'^2 + P_{t12}'^2}} \;;\quad b = \frac{\sqrt{\tfrac{2}{3}}\,P_{t8}'}{\sqrt{P_{t4}'^2 + P_{t8}'^2 + P_{t12}'^2}} \;,$$

$$c = \frac{\sqrt{\tfrac{2}{3}}\,P_{t12}'}{\sqrt{P_{t4}'^2 + P_{t8}'^2 + P_{t12}'^2}} \;;$$

$$P_{t4}' = P_{t4} - \frac{P_{t4} + P_{t8} + P_{t12}}{3} \qquad [MPa]$$

$$P_{t8}' = P_{t8} - \frac{P_{t4} + P_{t8} + P_{t12}}{3} \qquad [MPa]$$

$$P_{t12}' = P_{t12} - \frac{P_{t4} + P_{t8} + P_{t12}}{3} \qquad [MPa]$$

**14.** Verfahren nach Anspruch 12 oder 13, das ferner das Messen eines Drehwinkels ($\alpha$) der zweiten Satteleinrichtung (4) in Bezug auf die Bezugsachse (X), der zur anfänglichen Winkelposition ($\phi_0$) addiert werden soll, um die Winkelposition ($\phi$) zu berechnen, umfasst.

## Revendications

**1.** Système pour alimenter avec un fluide sous pression une table rotative hydrostatique (2) pour une machine-outil, ladite table rotative hydrostatique (2) comprenant des premiers moyens de couronne d'orientation (3) munis d'une pluralité de poches hydrostatiques ($T_1$, $T_2$, ..., $T_{12}$) alimentées avec ledit fluide sous pression afin de supporter des deuxièmes moyens de couronne d'orientation (4) tournant autour d'un axe de rotation (B) et agencés pour supporter un élément (20), ledit système comprenant une pluralité d'unités d'alimentation ($S_1$, $S_2$, $S_3$), chaque unité d'alimentation ($S_1$, $S_2$, $S_3$) étant agencée pour fournir ledit fluide auxdites poches hydrostatiques ($T_1$, $T_2$, ..., $T_{12}$) avec une pression d'alimentation respective ($P_1$, $P_2$, $P_3$) qui est réglable en fonction d'une position angulaire ($\phi$) dudit élément (20) par rapport à un axe de référence (X) de ladite table rotative hydrostatique (2), en particulier ledit élément (20) étant placé sur lesdits deuxièmes moyens de couronne d'orientation (4) d'une manière décentrée par rapport audit axe de rotation (B), le système étant **caractérisé en ce que** chaque poche hydrostatique ($T_1$, $T_2$, ..., $T_{12}$) est reliée par des résistances hydrauliques respectives ($R_{1,1}$, $R_{1,2}$, $R_{1,3}$, ..., $R_{12,3}$) à ladite pluralité d'unités d'alimentation ($S_1$, $S_2$, $S_3$), et **en ce que** chaque pression d'alimentation réglable ($P_1$, $P_2$, $P_3$) peut être obtenue à partir d'une pression d'alimentation principale ($P_a$) grâce à des moyens de réglage ($PV_1$, $PV_2$, $PV_3$) d'une unité d'alimentation respective ($S_1$, $S_2$, $S_3$), chaque pression d'alimentation étant définie par la formule :

$$P_j = P_a \left( K_1 + \frac{K_2}{2} \left( \cos\left( \phi + \frac{2\pi j}{M} \right) + 1 \right) \right) \qquad [\text{eq. 1}]$$

où:

P$_a$ est ladite pression d'alimentation principale dudit fluide [Pa] ;
$K_1$ et $K_2$ sont des paramètres positifs sans dimension tels que $0 < K_1 + K_2 \leq 1$ ;
$\phi$ est ladite position angulaire dudit élément décentré (20) [rad] ;
$j = 1, 2, ..., M$ ; M étant le nombre total de ladite unité d'alimentation ($S_1$, $S_2$, $S_3$).

2. Système selon la revendication 1, dans lequel chaque unité d'alimentation ($S_1$, $S_2$, $S_3$) comprend un collecteur d'alimentation respectif ($M_1$, $M_2$, $M_3$) alimenté par ledit fluide hydraulique avec ladite pression d'alimentation réglable respective ($P_1$, $P_2$, $P_3$).

3. Système selon la revendication 2, dans lequel chaque unité d'alimentation ($S_1$, $S_2$, $S_3$) comprend des moyens de réglage respectifs ($PV_1$, $PV_2$, $PV_3$) interposés entre le collecteur d'alimentation respectif ($M_1$, $M_2$, $M_3$) et des moyens distributeurs (11) pour alimenter ledit fluide avec ladite pression d'alimentation principale ($P_a$) sensiblement constante et ayant une valeur définie, en particulier comprise entre 3 et 10 MPa.

4. Système selon l'une quelconque des revendications précédentes, dans lequel la valeur d'une résistance hydraulique ($R_{1,1}$, $R_{1,2}$, $R_{1,3}$, ..., $R_{N,3}$) interposée entre chaque poche hydrostatique ($T_1$, $T_2$, ..., $T_{12}$) et une unité d'alimentation respective ($S_1$, $S_2$, $S_3$) est donnée par la formule :

$$R_{i,j} = \frac{K}{c \left( \frac{2\pi i}{N} + \frac{2\pi j}{M} \right) + 1} \qquad [\text{eq. 2}]$$

où :

K est une constante de proportionalité [Pa.m3/s] ;
$i = 1, 2, ..., N$ ; N étant le nombre total desdites poches hydrostatiques ($T_1$, $T_2$, ..., $T_{12}$) ;
$j = 1, 2, ..., M$ ; M étant le nombre total de ladite pluralité d'unités d'alimentation ($S_1$, $S_2$, $S_3$).

5. Système selon la revendication 3 ou 4, lorsque la revendication 4 est dépendante de la revendication 3, comprenant une unité de commande (15) agencée pour commander au moins lesdits moyens de réglage ($PV_1$, $PV_2$, $PV_3$) et des moyens de capteur (12, 13, 14) reliés à ladite unité de commande (15) et agencés pour détecter un possible déséquilibre dudit élément (20) en relation avec ledit axe de rotation (B) et/ou déterminer une position angulaire initiale ($\phi_0$) dudit élément (20) en relation avec ledit axe de référence (X).

6. Système selon la revendication 5, dans lequel lesdits moyens de capteur comprennent une pluralité de capteurs de pression (12, 13, 14) reliés à des poches hydrostatiques respectives ($T_1$, $T_5$, $T_9$) desdits premiers moyens de couronne d'orientation (3) pour mesurer une pression dudit fluide dans la poche respective, lesdites poches hy-

drostatiques respectives ($T_1$, $T_5$, $T_9$) étant espacées angulairement entre elles.

7. Système selon la revendication 5 ou 6, comprenant des moyens de capteurs supplémentaires aptes à mesurer un angle de rotation ($\alpha$) desdits deuxièmes moyens de couronne d'orientation (4), autour dudit axe de rotation (B), en relation avec ledit axe de référence (X), ladite unité de commande (15) étant reliée auxdits moyens de capteurs supplémentaires afin d'ajouter ledit angle de rotation (B) à ladite position angulaire initiale ($\phi_0$) et de calculer ladite position angulaire ($\phi$).

8. Système selon l'une quelconque des revendications précédentes, dans lequel le nombre (M) de ladite pluralité d'unités d'alimentation ($S_1$, $S_2$, $S_3$) est inférieur au nombre (N) de ladite pluralité de poches hydrostatiques ($T_1$, $T_2$, ..., $T_{12}$).

9. Table rotative hydrostatique pour une machine-outil, munie d'une pluralité de poches hydrostatiques ($T_1$, $T_2$, ..., $T_{12}$), comprenant un système (1) selon l'une quelconque des revendications précédentes, destiné à alimenter lesdites poches hydrostatiques ($T_1$, $T_2$, ..., $T_{12}$) avec un fluide sous pression.

10. Procédé pour alimenter avec un fluide sous pression une table rotative hydrostatique (2) pour une machine-outil, ladite table rotative hydrostatique (2) comprenant des premiers moyens de couronne d'orientation (3) munis d'une pluralité de poches hydrostatiques ($T_1$, $T_2$, ..., $T_{12}$) alimentées avec ledit fluide sous pression afin de supporter des deuxièmes moyens de couronne d'orientation (4) tournant autour d'un axe de rotation (B) et agencés pour supporter un élément (20), **caractérisé en ce que** ledit procédé comprend l'alimentation de chaque poche hydrostatique ($T_1$, $T_2$, ..., $T_{12}$), par l'intermédiaire de résistances hydrauliques respectives ($R_{1,1}$, $R_{1,2}$, $R_{1,3}$, ..., $R_{12,3}$), avec une pluralité de pressions d'alimentation ($P_1$, $P_2$, $P_3$) qui sont réglables en fonction de ladite position angulaire ($\phi$) dudit élément (20) par rapport à un axe de référence (X) de ladite table rotative hydrostatique (2), en particulier ledit élément (20) étant placé sur lesdits deuxièmes moyens de couronne d'orientation (4) d'une manière décentrée par rapport audit axe de rotation (B), ladite pluralité de pressions d'alimentation ($P_1$, $P_2$, $P_3$) étant réglable par l'unité d'alimentation respective ($S_1$, $S_2$, $S_3$), chaque pression d'alimentation réglable ($P_1$, $P_2$, $P_3$) pouvant être obtenue à partir d'une pression d'alimentation principale ($P_a$) grâce à des moyens de réglage ($PV_1$, $PV_2$, $PV_3$) d'une unité d'alimentation respective ($S_1$, $S_2$, $S_3$), chaque pression d'alimentation étant définie par la formule :

$$P_j = P_a\left(K_1 + \frac{K_2}{2}\cdot\left(\cos\left(\phi + \frac{2\pi j}{M}\right) + 1\right)\right) \qquad [\text{eq. 1}]$$

où :

$P_a$ est ladite pression d'alimentation principale dudit fluide [Pa] ;
$K_1$ et $K_2$ sont des paramètres positifs sans dimension tels que $0 < K_1 + K_2 \leq 1$ ;
$\phi$ est ladite position angulaire dudit élément décentré (20) [rad] ;
$j = 1,2, ..., M$ ; M étant le nombre total de ladite unité d'alimentation ($S_1$, $S_2$, $S_3$).

11. Procédé selon la revendication 10, dans lequel la valeur d'une résistance hydraulique ($R_{1,1}$, $R_{1,2}$, $R_{1,3}$, ..., $R_{N,3}$) interposée entre chaque poche hydrostatique ($T_1$, $T_2$, ..., $T_{12}$) et une unité d'alimentation respective ($S_1$, $S_2$, $S_3$) est donnée par la formule :

$$R_{i,j} = \frac{K}{c\left(\frac{2\pi i}{N} + \frac{2\pi j}{M}\right) + 1} \qquad [\text{eq. 2}]$$

où :

K est une constante de proportionalité [Pa.m$^3$/s] ;
$i = 1, 2, ..., N$ ; N étant le nombre total desdites poches hydrostatiques ($T_1$, $T_2$, ..., $T_{12}$) ;
$j = 1, 2, ..., M$ ; M étant le nombre total de ladite pluralité d'unités d'alimentation ($S_1$, $S_2$, $S_3$).

**12.** Procédé selon la revendication 10 ou 11, comprenant, dans une étape de réglage initial, la détection d'un possible déséquilibre dudit élément (20) en relation avec ledit axe de rotation (B) et la détermination d'une position angulaire initiale ($\phi_0$) dudit élément (20) en relation avec ledit axe de référence (X) en mesurant une pluralité de pressions effectives ($P_{t4}$, $P_{t8}$, $Pt_{12}$) dudit fluide dans les poches hydrostatiques respectives ($T_4$, $T_8$, $T_{12}$) desdits premiers moyens de couronne d'orientation (3), lesdites poches hydrostatiques respectives ($T_4$, $T_8$, $T_{12}$) étant espacées angulairement entre elles, ladite détermination comprenant la comparaison et le traitement de ladite pluralité de pressions des poches mesurées et le calcul de ladite position angulaire initiale ($\phi_0$).

**13.** Procédé selon la revendication 12, dans lequel ladite position angulaire initiale ($\phi_0$) est calculable en mesurant les valeurs desdites pressions effectives ($P_{t4}$, $P_{t8}$, $Pt_{12}$) dans trois poches hydrostatiques respectives ($T_4$, $T_8$, $T_{12}$) qui sont espacées angulairement les unes des autres de 120° avec la formule :

$$\phi = \begin{cases} \arccos(a - 1/2b - 1/2c) & si \quad b \geq c \\ 2\pi - \arccos(a - 1/2b - 1/2c) & si \quad b < c \end{cases} \qquad [eq.\ 5]$$

où :

$$a = \frac{\sqrt{2/3}\,P_{t4}'}{\sqrt{P_{t4}'^2 + P_{t8}'^2 + P_{t12}'^2}} \ ; \quad b = \frac{\sqrt{2/3}\,P_{t8}'}{\sqrt{P_{t4}'^2 + P_{t8}'^2 + P_{t12}'^2}} \ ,$$

$$c = \frac{\sqrt{2/3}\,P_{t12}'}{\sqrt{P_{t4}'^2 + P_{t8}'^2 + P_{t12}'^2}} \ ;$$

$$P_{t4}' = P_{t4} - \frac{P_{t4} + P_{t8} + P_{t12}}{3} \qquad [MPa]$$

$$P_{t8}' = P_{t8} - \frac{P_{t4} + P_{t8} + P_{t12}}{3} \qquad [MPa]$$

$$P_{t12}' = P_{t12} - \frac{P_{t4} + P_{t8} + P_{t12}}{3} \qquad [MPa]$$

**14.** Procédé selon la revendication 12 ou 13, comprenant en outre la mesure d'un angle de rotation ($\alpha$) desdits deuxièmes moyens de couronne d'orientation (4) par rapport audit axe de référence (X) à ajouter à ladite position angulaire initiale ($\phi_0$) pour calculer ladite position angulaire ($\phi$).

Fig. 1

Fig. 4

Fig. 2

EP 2 067 569 B1

Fig. 3

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0113305 A
- DE 1148123